# EUROPEAN PATENT APPLICATION

(11) **EP 4 503 706 A1**
(43) Date of publication of application: **05.02.2025**
(21) Application number: 23829737.8
(22) Date of filing: 12.05.2023
(51) Int. Cl.: H04W 24/02, H04W 92/24

(54) **NETWORK CAPABILITY EXPOSURE METHOD AND RELATED DEVICE**

(30) Priority: 27.06.2022 CN 202210734112
(71) Applicant: Tencent Technology (Shenzhen) Company Limited, Shenzhen, Guangdong 518057 (CN)
(72) Inventor: ZHANG, Zhuoyun, Shenzhen, Guangdong 518057 (CN)
(74) Representative: EP&C
(86) International application number: PCT/CN2023/093762
(87) International publication number: WO 2024/001551

(57) **Abstract**

Embodiments of the present disclosure provide a network capability exposure method and a related device, and relate to the field of communication technologies. The method is performed by an application function, and includes: transmitting a first network capability exposure request message to a first network exposure function of a first public land mobile network, the first network capability exposure request message including application function identification information, an exposure information notification address, first network capability exposure request parameter information, and capability exposure request sharing information; and receiving a first response message returned by the first network exposure function with respect to the first network capability exposure request message, the first response message including capability exposure request sharing indication information, and the capability exposure request sharing indication information being configured for indicating whether the first network exposure function agrees to share a capability exposure request with a second public land mobile network.

## Description

### RELATED APPLICATION

This application claims priority to Chinese Patent Application No. 202210734112.4, filed with the China National Intellectual Property Administration on June 27, 2022, and entitled "NETWORK CAPABILITY EXPOSURE METHOD AND RELATED DEVICE", which is incorporated herein by reference in its entirety.

### FIELD OF THE TECHNOLOGY

The present disclosure relates to the field of communication technologies, and in particular, to network capability exposure.

### BACKGROUND OF THE DISCLOSURE

In related art, for the same service, if a third-party service provider needs to put forward exposure interaction requirements to a communication network to obtain a specific network exposure capability, it is necessary to interact with different operators separately. In addition, interface parameters (interaction parameters) of capability information and network exposure capabilities (such as types and quality) that are exposed by different operators/different communication networks may be different. Therefore, many inconveniences and problems are brought to network capability exposure interaction of a third-party service.

### SUMMARY

Embodiments of the present disclosure provide a network capability exposure method, a communication device, a computer-readable storage medium, and a computer program product, optimizing for network capability exposure of a mobile communication network to third-party services.

An embodiment of the present disclosure provides a network capability exposure method. The method is performed by an application function, and includes: transmitting a first network capability exposure request message to a first network exposure function of a first public land mobile network, the first network capability exposure request message including application function identification information, an exposure information notification address, first network capability exposure request parameter information, and capability exposure request sharing information; and receiving a first response message returned by the first network exposure function with respect to the first network capability exposure request message, the first response message including capability exposure request sharing indication information, and the capability exposure request sharing indication information being configured for indicating whether the first network exposure function agrees to share a capability exposure request with a second public land mobile network.

An embodiment of the present disclosure provides a network capability exposure method. The method is performed by a first network exposure function of a first public land mobile network, and includes: receiving a first network capability exposure request message transmitted by an application function, the first network capability exposure request message including application function identification information, an exposure information notification address, first network capability exposure request parameter information, and capability exposure request sharing information; performing authentication and verification on the first network capability exposure request message to generate a first response message, the first response message including capability exposure request sharing indication information, and the capability exposure request sharing indication information being configured for indicating whether the first network exposure function agrees to share a capability exposure request with a second public land mobile network; and returning the first response message to the application function.

An embodiment of the present disclosure provides a network capability exposure method. The method is performed by a second network exposure function of a second public land mobile network, and includes: receiving a second network capability exposure request message transmitted by a first network exposure function of a first public land mobile network, the second network capability exposure request message including application function identification information, an exposure information notification address, and second network capability exposure request parameter information; performing authentication and verification on the second network capability exposure request message to generate a second response message, the second response message including capability exposure indication information, and the capability exposure indication information being configured for indicating whether the second network exposure function agrees to expose a network capability to an application function; and returning the second response message to the application function.

An embodiment of the present disclosure provides a network capability exposure method. The method is performed by an application function, and includes: transmitting a third network capability exposure request message to a first network exposure function of a first public land mobile network, the third network capability exposure request message including application function identification information, an exposure information notification address, and first network capability exposure request parameter information; receiving a capability exposure request sharing message returned by the first network exposure function, the capability exposure request sharing message including second public land mobile network identification information indicating that sharing of a capability exposure request is allowed; and returning a third response message to the first network exposure function with respect to the capability exposure request sharing message, the third response message including request sharing indication information, and the request sharing indication information being configured for indicating whether the application function agrees to share a capability exposure request with a second public land mobile network.

An embodiment of the present disclosure provides a network capability exposure method. The method is performed by a first network exposure function of a first public land mobile network, and includes: receiving a third network capability exposure request message transmitted by an application function, the third network capability exposure request message including application function identification information, an exposure information notification address, and first network capability exposure request parameter information; returning a capability exposure request sharing message to the application function if the third network capability exposure request message satisfies network capability exposure sharing negotiation information, the capability exposure request sharing message including second public land mobile network identification information indicating that sharing of a capability exposure request is allowed; and receiving a third response message returned by the application function with respect to the capability exposure request sharing message, the third response message including request sharing indication information, and the request sharing indication information being configured for indicating whether the application function agrees to share a capability exposure request with a second public land mobile network.

An embodiment of the present disclosure provides an application function, including: a sending unit, configured to transmit a first network capability exposure request message to a first network exposure function of a first public land mobile network, the first network capability exposure request message including application function identification information, an exposure information notification address, first network capability exposure request parameter information, and capability exposure request sharing information; and a receiving unit, configured to receive a first response message returned by the first network exposure function with respect to the first network capability exposure request message, the first response message including capability exposure request sharing indication information, and the capability exposure request sharing indication information being configured for indicating whether the first network exposure function agrees to share a capability exposure request with a second public land mobile network.

An embodiment of the present disclosure provides a first network exposure function of a first public land mobile network, including: a receiving unit, configured to receive a first network capability exposure request message transmitted by an application function, the first network capability exposure request message including application function identification information, an exposure information notification address, first network capability exposure request parameter information, and capability exposure request sharing information; a processing unit, configured to perform authentication and verification on the first network capability exposure request message to generate a first response message, the first response message including capability exposure request sharing indication information, and the capability exposure request sharing indication information being configured for indicating whether the first network exposure function agrees to share a capability exposure request with a second public land mobile network; and a sending unit, configured to return the first response message to the application function.

An embodiment of the present disclosure provides a second network exposure function of a second public land mobile network, including: a receiving unit, configured to receive a second network capability exposure request message transmitted by a first network exposure function of a first public land mobile network, the second network capability exposure request message including application function identification information, an exposure information notification address, and second network capability exposure request parameter information; a processing unit, configured to perform authentication and verification on the second network capability exposure request message to generate a second response message, the second response message including capability exposure indication information, and the capability exposure indication information being configured for indicating whether the second network exposure function agrees to expose a network capability to an application function; and a sending unit, configured to return the second response message to the application function.

An embodiment of the present disclosure provides an application function, including: a sending unit, configured to transmit a third network capability exposure request message to a first network exposure function of a first public land mobile network, the third network capability exposure request message including application function identification information, an exposure information notification address, and first network capability exposure request parameter information; and a receiving unit, configured to receive a capability exposure request sharing message returned by the first network exposure function, the capability exposure request sharing message including second public land mobile network identification information indicating that sharing of a capability exposure request is allowed, the sending unit being further configured to return a third response message to the first network exposure function with respect to the capability exposure request sharing message, the third response message including request sharing indication information, and the request sharing indication information being configured for indicating whether the application function agrees to share a capability exposure request with a second public land mobile network.

An embodiment of the present disclosure provides a first network exposure function of a first public land mobile network, including: a receiving unit, configured to receive a third network capability exposure request message transmitted by an application function, the third network capability exposure request message including application function identification information, an exposure information notification address, and first network capability exposure request parameter information; and a sending unit, configured to return a capability exposure request sharing message to the application function if the third network capability exposure request message satisfies network capability exposure sharing negotiation information, the capability exposure request sharing message including second public land mobile network identification information indicating that sharing of a capability exposure request is allowed, the receiving unit being further configured to receive a third response message returned by the application function with respect to the capability exposure request sharing message, the third response message including request sharing indication information, and the request sharing indication information being configured for indicating whether the application function agrees to share a capability exposure request with a second public land mobile network.

An embodiment of the present disclosure provides a network capability exposure system, including an application function, a first network exposure function of a first public land mobile network, and a second network exposure function of a second public land mobile network.

The application function, the first network exposure function, and the second network exposure function are configured to perform the network capability exposure method in embodiments of the present disclosure.

An embodiment of the present disclosure provides a network capability exposure system, including an application function and a first network exposure function of a first public land mobile network.

The application function and the first network exposure function are configured to perform the network capability exposure method in embodiments of the present disclosure.

An embodiment of the present disclosure provides a communication device, including: one or more processors; and a memory, configured to store one or more programs, the one or more programs, when executed by the one or more processors, causing the communication device to implement the network capability exposure method in embodiments of the present disclosure.

An embodiment of the present disclosure provides a computer-readable storage medium, having a computer program stored thereon, the computer program, when run on a computer, causing the computer to implement the network capability exposure method in embodiments of the present disclosure.

An embodiment of the present disclosure provides a computer program product, including a computer program, the computer program, when executed by a computer, implementing the network capability exposure method in embodiments of the present disclosure.

In the method provided in some implementations of the present disclosure, when the application function transmits the first network capability exposure request message to the first network exposure function of the first public land mobile network, capability exposure request sharing information is carried in the first network capability exposure request message, to indicate, based on the capability exposure request sharing information, whether the application function allows to share a capability exposure request. The first public land mobile network and the second public land mobile network may respectively serve as mobile communication networks provided by two different operators or two different mobile communication networks deployed by the same operator, so that the application function (a third-party service provider) does not need to interact with different mobile communication networks separately, and the application function only needs to put forward an interaction requirement for capability exposure to a mobile communication network of one of the operators based on the first network capability exposure request message. A network capability exposure mechanism is optimized to simplify an interaction process between a third-party service provider and different mobile communication networks and improve interaction efficiency. In addition, the third-party service provider no longer needs to consider differences between interaction parameters and network exposure capabilities of different mobile communication networks. This brings convenience to network capability exposure and interaction of a third-party service.

### BRIEF DESCRIPTION OF THE DRAWINGS

FIG. 1 is a schematic diagram of a communication system architecture according to an embodiment of the present disclosure.
FIG. 2 is a diagram of a system architecture of a 5G network according to an embodiment of the present disclosure.
FIG. 3 is a schematic flowchart of a network capability exposure method according to an embodiment of the present disclosure.
FIG. 4 is a schematic diagram of an interaction of a network capability exposure method according to an embodiment of the present disclosure.
FIG. 5 is a schematic diagram of an interaction of a network capability exposure method according to another embodiment of the present disclosure.
FIG. 6 is a schematic flowchart of a network capability exposure method according to another embodiment of the present disclosure.
FIG. 7 is a schematic flowchart of a network capability exposure method according to still another embodiment of the present disclosure.
FIG. 8 is a schematic flowchart of a network capability exposure method according to still yet another embodiment of the present disclosure.
FIG. 9 is a schematic diagram of an interaction of a network capability exposure method according to still another embodiment of the present disclosure.
FIG. 10 is a schematic flowchart of a network capability exposure method according to still yet another embodiment of the present disclosure.
FIG. 11 is a block diagram of an application function according to an embodiment of the present disclosure.
FIG. 12 is a block diagram of a first network exposure function of a first public land mobile network according to an embodiment of the present disclosure.
FIG. 13 is a block diagram of a second network exposure function of a second public land mobile network according to an embodiment of the present disclosure.
FIG. 14 is a schematic diagram of a structure of a communication device according to an embodiment of the present disclosure.

### DESCRIPTION OF EMBODIMENTS

To make the objectives, technical solutions, and advantages of the present disclosure more apparent, example embodiments of the present disclosure is described in detail below with reference to the accompanying drawings. In the accompanying drawings, the same reference numerals are used to represent the same components. Embodiments described herein are illustrative only and are not be construed to limit the scope of the present disclosure.

The technical solutions in embodiments of the present disclosure may be applied to various communication systems, for example, a Global System for Mobile Communications (GSM) system, a code division multiple access (CDMA) system, a wideband code division multiple access (WCDMA) system, a general packet radio service (GPRS), a long term evolution (LTE) system, an LTE frequency division duplex (FDD) system, LTE time division duplex (TDD), a universal mobile communication system (UMTS), a worldwide interoperability for microwave access (WiMAX) communication system, a 5G system, or a future evolved mobile communication system.

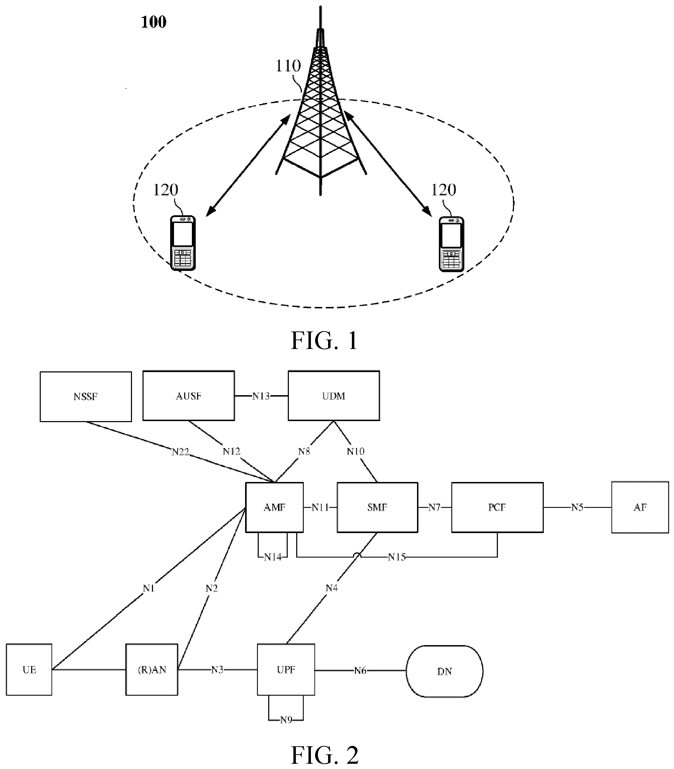

For example, a communication system 100 applied to an embodiment of the present disclosure is shown in FIG. 1. The communication system 100 may include a network device 110. The network device 110 may be a device that communicates with a terminal 120 (or referred to as a communication terminal or a terminal). The network device 110 may provide communication coverage for a specific geographic area and may communicate with terminals located within the geographic area. In one embodiment, the network device 110 may be a base transceiver station (BTS) in the GSM system or the CDMA system, a base station (NodeB, NB) in the WCDMA system, an evolved NodeB (eNB or eNodeB) in the LTE system, a base station in a 5G communication system, or a wireless controller in a cloud radio access network (CRAN). Alternatively, the network device may be a mobile switching center, a relay station, an access point, a vehicle-mounted device, a wearable device, a hub, a switch, a bridge, a router, a network-side devices in a 5G network, a network device in a future evolved public land mobile network (PLMN), or the like.

The communication system 100 further includes at least one terminal 120 located within the coverage of the network device 110. As used herein, the "terminal" includes, but is not limited to, connections via wired lines, such as connections via a public switched telephone network (PSTN), a digital subscriber line (DSL), a digital cable, and a direct cable; and/or another data connection/network; and/or via a wireless interface, such as for a cellular network, a wireless local area network (WLAN), a digital television network such as a DVB-H network, a satellite network, and an AM-FM broadcast transmitter; and/or an apparatus of another terminal configured to receive/transmit communication signals; and/or an Internet of things (IoT) device. A terminal configured to communicate through a wireless interface may be referred to as a "wireless communication terminal", a "wireless terminal", or a "mobile terminal". An example of the mobile terminal includes, but is not limited to, a satellite or a cellular phone; a personal communication system (PCS) terminal that can combine cellular radiotelephone with data processing, fax, and data communication capabilities; a PDA that may include a radiotelephone, a pager, Internet/Intranet access, a Web browser, a planner, a calendar, and/or a global positioning system (GPS) receiver; and a conventional laptop and/or handheld receiver or another electronic device including a radiotelephone transceiver. The terminal may be referred to as an access terminal, user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a vehicle-mounted device, a wearable device, a terminal in the 5G network or a terminal in the future evolved PLMN, or the like.

In one embodiment, device to device (D2D) communication may be performed between terminals 120.

FIG. 1 exemplarily shows a network device and two terminals. In one embodiment, the communication system 100 may include a plurality of network devices. Other quantities of terminals may be included in the coverage of each network device. This is not limited in embodiments of the present disclosure.

In one embodiment, the communication system 100 may further include another network element such as a policy control function network element or an access mobility management function network element. This is not limited in embodiments of the present disclosure.

In embodiments of the present disclosure, a device having a communication function in a network/system may be referred to as a communication device. Using the communication system 100 shown in FIG. 1 as an example, the communication device may include the network device 110 and the terminal 120 that have communication functions. The network device 110 and the terminal 120 may be the specific devices described above. Details are not described herein again.

The terms "system" and "network" may be used interchangeably in this specification. The term "and/or" used herein describes only an association relationship between associated objects and represents that three relationships may exist. For example, A and/or B may represent the following three cases: Only A exists, both A and B exist, and only B exists.

FIG. 2 is a diagram of a system architecture of a 5G network according to an embodiment of the present disclosure. As shown in FIG. 2, devices included in a 5G network system include a terminal (UE), a radio access network (RAN), a user plane function (UPF), a data network (DN), an access and mobility management function (AMF), a session management function (SMF), a policy control function (PCF), an application function (AF), an authentication server function (AUSF), and a unified data management (UDM).

The "network capability exposure" and "capability exposure" mentioned in embodiments of the present disclosure refer to abstracting and exposing capabilities of a network (such as the 5G network, but the present disclosure is not limited thereto), to achieve friendly interoperability and mutually beneficial cooperation between an operator network and a third-party service provider, thereby satisfying richer and more flexible mobile network capabilities exposed to a third party.

Capability exposure supports external exposure of network capabilities. For example, an externally exposed service capability may include, but is not limited to, the following:
(1) Network detection capability exposure: It refers to that a network provides a third party with a capability to detect a congestion status of a specific area of the network, detect a movement range of a terminal, or the like, and detection event information is exposed externally via a network exposure function (NEF).
(2) Network basic service capability exposure: It refers to that a network provides a basic short message service message capability, a voice capability, billing capability, and the like to a third party.
(3) Network control capability exposure: It refers to that a network provides a third party with a capability, such as Quality of Service (QoS) guarantee.
(4) Network information capability exposure: It refers to that a network provides internal network information to a third party, including real-time terminal connection attributes, terminal location information, non-real-time big data analysis information, or the like.
(5) Network slice orchestration and management capability exposure: It refers to that a network exposes a life cycle management capability of a network slice to a third party.
(6) Reverse capability exposure: It refers to that a third party may expose valuable information to a mobile network, such as a terminal communication mode and mobility information, for network optimization and management.

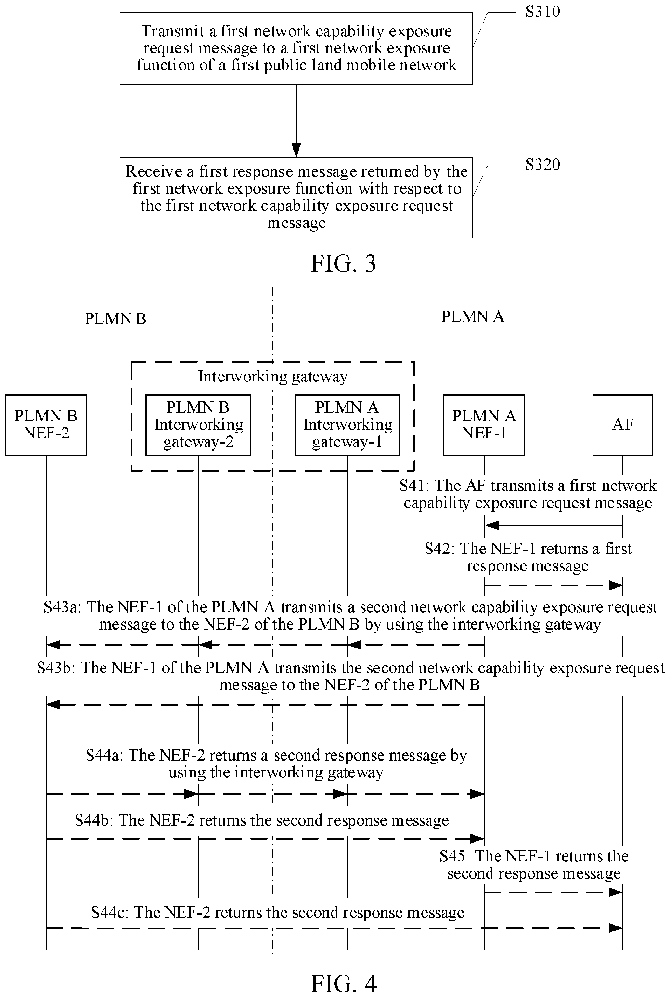

FIG. 3 is a schematic flowchart of a network capability exposure method according to an embodiment of the present disclosure. In FIG. 3, the method provided in the embodiment may be performed by any communication device. The communication device in the embodiment of the present disclosure may be, for example, the AF in FIG. 2, but the present disclosure is not limited thereto.

As shown in FIG. 3, the method in the embodiment of the present disclosure may include the following operations.

S310: Transmit a first network capability exposure request message to a first network exposure function (where the first network exposure function is denoted as an NEF-1 in the following description) of a first public land mobile network (PLMN, where the first public land mobile network is denoted as a PLMN A in the following description).

In the embodiment of the present disclosure, the first network capability exposure request message refers to a message that is transmitted by the AF to the NEF-1 of PLMN A and that is configured for requesting PLMN A to expose a network capability to the AF. The first network capability exposure request message may include application function identification information (denoted as an AF ID) of an application function, an exposure information notification address, first network capability exposure request parameter information, and capability exposure request sharing information.

In the embodiment of the present disclosure, the exposure information notification address refers to an address to which exposed network capability information is returned when PLMN A and/or PLMN B allow(s) to expose a network capability to the AF. For example, the address may be an Internet protocol (IP) address of the AF. To be specific, the NEF-1 may return a capability exposure notification message of PLMN A to the AF based on the exposure information notification address, and/or an NEF-2 may directly or indirectly return a capability exposure notification message of PLMN B to the AF based on the exposure information notification address.

In the embodiment of the present disclosure, the first network capability exposure request parameter information refers to what network capabilities the AF expects to expose to the AF. Specific first network capability exposure request parameter information may be set according to actual needs. For example, the first network capability exposure request parameter information may include event identity (Event ID, here for differentiation, it is referred to as first event identity). The first network capability exposure request parameter information may further include condition information for information reporting (for differentiation, it is here referred to as first reporting condition information) and the like.

In one embodiment, the first network capability exposure request parameter information may further include traffic flow template information.

In an exemplary embodiment, the traffic flow template information may include one or more of the following: a source IP address (a source network address), source port number, a destination IP address (destination network address), a destination port number, a fully qualified domain name (FQDN), and an application identity (APP ID), and the like of a target traffic flow.

In the embodiment of the present disclosure, the target traffic flow refers to a traffic flow formed by transmission of an uplink data packet sent by the terminal and/or a downlink data packet sent by a service server in a network for one or more target services. The target service may be set according to actual needs.

In the embodiment of the present disclosure, the capability exposure request sharing information may be configured for indicating whether the AF allows the first network capability exposure request message to be shared with a PLMN other than the requested PLMN A.

If the capability exposure request sharing information indicates that the application function allows to share a capability exposure request, the first network capability exposure request message may further include second public land mobile network (where the second public land mobile network is denoted as a PLMN B) identification information indicating that sharing of the capability exposure request is allowed. The second public land mobile network identification information refers to any identification information that may uniquely identify the PLMN B. The second public land mobile network may be any one or more PLMNs other than the PLMN A.

In other embodiments, when the capability exposure request sharing information indicates that the application function allows to share the capability exposure request, the first network capability exposure request message may alternatively not include the second public land mobile network identification information. To be specific, the NEF-1 may determine, based on the capability exposure request sharing information carried in the first network capability exposure request message and based on negotiation between the PLMN A and other PLMNs, which PLMN the network capability exposure request of the AF is shared with.

S320: Receive a first response message returned by the first network exposure function with respect to the first network capability exposure request message.

In the embodiment of the present disclosure, after the NEF-1 of the PLMN A receives the first network capability exposure request message transmitted by the AF, authentication and verification are performed on the first network capability exposure request message. The first response message is generated based on an authentication and verification result, and the first response message is returned to the AF corresponding to the AF ID.

The first response message may include indication information about "whether to agree the first network capability exposure request message". If the authentication and verification result is that the authentication and verification is passed, the indication information about "whether to agree the first network capability exposure request message" may be "agree the first network capability exposure request message". On the contrary, if the authentication and verification result is failed, the indication information about "whether to agree the first network capability exposure request message" may be "disagree the first network capability exposure request message". If the NEF-1 rejects the first network capability exposure request message, the first response message may further include a rejection cause value.

In the embodiment of the present disclosure, the first response message may include capability exposure request sharing indication information, and the capability exposure request sharing indication information may be configured for indicating whether the first network exposure function agrees to share a capability exposure request with a second public land mobile network corresponding to second public land mobile network identification information.

In the embodiment of the present disclosure, the capability exposure request sharing indication information and the indication information about "whether to agree the first network capability exposure request message" may share the same indication information. For example, the same field is used. A first value is taken to indicate that the NEF-1 rejects the first network capability exposure request message. In other words, neither the PLMN A nor the PLMN B agrees to expose network capabilities to the AF. A second value is taken to indicate that the NEF-1 only agrees the PLMN A to exposure a network capability to the AF and does not support sharing the first network capability exposure request message to the PLMN B. A third value is taken to indicate that the NEF-1 agrees the PLMN A to exposure the network capability to the AF and supports sharing the first network capability exposure request message to the PLMN B. A fourth value is taken to indicate that the NEF-1 does not agree the PLMN A to expose the network capability to the AF, but supports sharing the first network capability exposure request message to the PLMN B. The capability exposure request sharing indication information and the indication information about "whether to agree to the first network capability exposure request message" may alternatively be different indication information separately. For example, two fields are used to indicate respectively, one field is configured for indicating whether the NEF-1 passes authentication and verification on the first network capability exposure request message, and the other field is configured for indicating whether the PLMN A in which the NEF-1 is located supports sharing the first network capability exposure request message to the PLMN B. This is not limited in the present disclosure.

In an exemplary embodiment, the method may further include: receiving a second response message if the capability exposure request sharing indication information indicates that the first network exposure function agrees to share the capability exposure request with the second public land mobile network.

In the embodiment of the present disclosure, if the NEF-1 agrees to share the first network capability exposure request message with the second public land mobile network, the NEF-1 may inform the AF based on the capability exposure request sharing indication information. In addition, the NEF-1 may alternatively generate a second network capability exposure request message based on the first network capability exposure request message, and transmit the second network capability exposure request message to an NEF-2 (a second network exposure function) of the PLMN B. When the NEF-2 receives the second network capability exposure request message, the NEF-2 may perform authentication and verification on the second network capability exposure request message to generate a second response message based on an authentication and verification result. The second response message includes capability exposure indication information about "whether to agree the second network capability exposure request message". If the authentication and verification result is that the authentication and verification is passed, the capability exposure indication information indicates that "the NEF-2 of the PLMN B agrees the second network capability exposure request message". Otherwise, the capability exposure indication information indicates that "the NEF-2 of the PLMN B does not agree the second network capability exposure request message".

In an exemplary embodiment, the method may further include: receiving a capability exposure notification message of the second public land mobile network if the capability exposure indication information indicates that the second network exposure function agrees to expose the network capability to the application function, the capability exposure notification message including exposure information content.

In the embodiment of the present disclosure, after the NEF-2 agrees to expose a network capability of the PLMN B to the AF, the AF may receive a capability exposure notification message of the PLMN B. The capability exposure notification message is configured for indicating related information of a network capability exposed, to the AF, by the PLMN B. For example, the capability exposure notification message may include exposure information content to be configured for indicating what exposure network capability is.

In an exemplary embodiment, the receiving a capability exposure notification message of the second public land mobile network may include: receiving the capability exposure notification message from the first network exposure function or the second network exposure function.

In some embodiments, after learning the exposure information notification address, the NEF-2 may directly transmit the capability exposure notification message of the PLMN B to the AF. In some other embodiments, if the NEF-2 and the NEF-1 may communicate with each other directly, the NEF-2 may first transmit the capability exposure notification message of the PLMN B to the NEF-1, and then the capability exposure notification message of the PLMN B is transmitted to the AF via the NEF-1.

In an exemplary embodiment, the receiving a capability exposure notification message of the second public land mobile network may include: receiving the capability exposure notification message from a first interworking gateway of the first public land mobile network or a second interworking gateway of the second public land mobile network.

In still some other embodiments, if the NEF-1 and the NEF-2 communicate with each other via an interworking gateway, the NEF-2 may first transmit the capability exposure notification message of the PLMN B to an interworking gateway-2 (the second interworking gateway) of the PLMN B, and then the interworking gateway-2 transmits the capability exposure notification message of the PLMN B to an interworking gateway-1 (the first interworking gateway) of the PLMN A, and then the interworking gateway-1 transmits the capability exposure notification message of the PLMN B to the NEF-1, and then the capability exposure notification message of the PLMN B is transmitted to the AF via the NEF-1.

In yet some other embodiments, the NEF-2 may first transmit the capability exposure notification message of the PLMN B to the interworking gateway-2 (the second interworking gateway) of the PLMN B, and then the interworking gateway-2 transmits the capability exposure notification message of the PLMN B to the AF.

In yet some other embodiments, the NEF-2 may first transmit the capability exposure notification message of the PLMN B to the interworking gateway-2 (the second interworking gateway) of PLMN B, then the interworking gateway-2 transmits the capability exposure notification message of the PLMN B to the interworking gateway-1 (the first interworking gateway) of the PLMN A, and then the interworking gateway-1 transmits the capability exposure notification message of the PLMN B to the AF.

In the embodiment of the present disclosure, if the capability exposure request sharing information in the first network capability exposure request message indicates that the AF does not allow to share a capability exposure request, the NEF-1 performs authentication and verification on the first network capability exposure request message to generate the first response message, the first response message including indication information about "whether to agree the first network capability exposure request message". If the indication information about "whether to agree the first network capability exposure request message" indicates that the NEF-1 rejects the first network capability exposure request message, this operation is ended. If the indication information about "whether to agree the first network capability exposure request message" indicates that the NEF-1 agrees the first network capability exposure request message, a capability exposure notification message of the PLMN A corresponding to the first event identity is transmitted to the AF when the NEF-1 detects that the first reporting condition information is satisfied.

In the embodiment of the present disclosure, if capability exposure request sharing indication information in the first response message indicates that the NEF-1 does not agree to share a capability exposure request with the PLMN B, and the indication information about "whether to agree the first network capability exposure request message" in the first response message indicates that the NEF-1 rejects the first network capability exposure request message, this operation is ended. If the indication information about "whether to agree the first network capability exposure request message" indicates that the NEF-1 agrees the first network capability exposure request message, a capability exposure notification message of the PLMN A corresponding to the first event identity is transmitted to the AF when the NEF-1 detects that the first reporting condition information is satisfied.

In the network capability exposure method provided in implementations of the present disclosure, when the application function transmits the first network capability exposure request message to the first network exposure function of the first public land mobile network, capability exposure request sharing information is carried in the first network capability exposure request message, to indicate, based on the capability exposure request sharing information, whether the application function allows to share a capability exposure request, so that the first network exposure function of the first public land mobile network can return, based on the capability exposure request sharing information carried in the first network capability exposure request message, capability exposure request sharing indication information included in the first response message to the application function, and the capability exposure request sharing indication information indicates whether the first network exposure function agrees to share the capability exposure request to the second public land mobile network. In other words, the first network exposure function of the first public land mobile network may serve as an agent of the application function, and the first public land mobile network and the second public land mobile network may respectively serve as mobile communication networks provided by two different operators or two different mobile communication networks deployed by the same operator, so that the application function does not need to interact with different mobile communication networks separately, and the application function only needs to put forward an interaction requirement for capability exposure to a mobile communication network of one of the operators based on the first network capability exposure request message. A network capability exposure mechanism is optimized to simplify an interaction process between a third-party service provider and different mobile communication networks and improve interaction efficiency. In addition, the third-party service provider no longer needs to consider differences between interaction parameters and network exposure capabilities of different mobile communication networks. This brings convenience to network capability exposure and interaction of a third-party service.

In an embodiment of FIG. 4, the AF actively requests to share a capability exposure request. In a system architecture of a scenario shown in FIG. 4, an application function (such as an AF), a first network exposure function (such as an NEF-1), and a second network exposure function (such as an NEF-2) are included. These network elements are configured to perform the network capability exposure method in an embodiment of the present disclosure. The method provided in the embodiment of the present disclosure may include the following operations.

S41: The AF transmits a first network capability exposure request message to the NEF-1 of a PLMN A.

In the embodiment of the present disclosure, the AF transmits the first network capability exposure request message to the NEF-1 of the PLMN A. The first network capability exposure request message may include an AF ID of the AF, an exposure information notification address, first network capability exposure request parameter information (such as a first Event ID and first reporting condition information), may further include traffic flow template information and capability exposure request sharing information (configured for indicating whether a capability exposure request is allowed to be shared with information of other PLMNs), and may further include PLMN identification information indicating that the capability exposure request is allowed. A PLMN B is used herein as an example for description.

S42: The NEF-1 returns a first response message to the AF.

In the embodiment of the present disclosure, the NEF-1 receives the first network capability exposure request message, performs authentication and verification on the first network capability exposure request message transmitted by the AF, and returns the first response message to the AF. The first response message may include indication information about "whether to agree the first network capability exposure request message", and if rejected, the first response message may further include a rejection cause value.

If the NEF-1 only agrees this PLMN A to expose a network capability to the AF and does not support sharing the first network capability exposure request message with the PLMN B, the capability exposure request sharing indication information in the first response message in S42 may indicate the NEF-1 to reject to share a capability exposure request to the PLMN B. The first response message may further include a cause value for rejecting to share the capability exposure request (for example, this PLMN A does not support sharing, or the PLMN B does not support sharing). There is no need to perform subsequent S43 to S45.

In one embodiment, S43a: The NEF-1 of the PLMN A transmits a second network capability exposure request message to the NEF-2 of the PLMN B by using an interworking gateway-1 of the PLMN A and an interworking gateway-2 of the PLMN B separately.

For example, the NEF-1 may alternatively generate the second network capability exposure request message based on the first network capability exposure request message, and transmit the second network capability exposure request message to the interworking gateway-1 of the PLMN A. The second network capability exposure request message may include identification information of a target PLMN B (that is, second public land mobile network identification information), identification information of this PLMN A (that is, first public land mobile network identification information), an AF ID, the exposure information notification address, the second network capability exposure request parameter information, and the like. The second network capability exposure request parameter information may include a second Event ID, and may further include second reporting condition information. The second network capability exposure request parameter information may further include traffic flow template information.

In the embodiment of the present disclosure, the second network capability exposure request parameter information and the first network capability exposure request parameter information may be the same, may be different, or may be partially the same. The second Event ID may be the same as the first Event ID or may be different from the first Event ID. The first reporting condition information and the second reporting condition information may be the same or may be different. The second network capability exposure request parameter information may be determined by the NEF-1 based on the first network capability exposure request parameter information, as well as various factors such as a network capability that the PLMN B can expose and a required interface parameter. It is not necessary for the AF (such as a third-party service provider) to consider differences between interaction parameters and network exposure capabilities of mobile communication networks provided by different operators. Instead, the PLMN A serves as an agent for the AF to negotiate with another PLMN B.

The interworking gateway-1 transmits the second network capability exposure request message to the interworking gateway-2 of the PLMN B based on the identification information of the target PLMN B included in the second network capability exposure request message (where the two PLMNs may pass a plurality of Interworking gateways, and a specific quantity is not limited in the present disclosure). The interworking gateway-2 transmits the second network capability exposure request message to the NEF-2 of the PLMN B.

In one embodiment, S43b: The NEF-1 of the PLMN A transmits the second network capability exposure request message to the NEF-2 of the PLMN B.

In an embodiment of the present disclosure, when NEFs of two PLMNs may interact directly, an interworking gateway may not be needed. To be specific, the NEF-1 may directly transmit the second network capability exposure request message to the NEF-2.

In one embodiment, S44a: The NEF-2 returns a second response message to the NEF-1 by using the interworking gateway-2 of the PLMN B and the interworking gateway-1 of the PLMN A separately.

In the embodiment of the present disclosure, the NEF-2 performs authentication and verification on the second network capability exposure request message, and returns the second response message to the interworking gateway-2 of the PLMN B. The second response message may include identification of a target PLMN A (first public land mobile network identification information), identification of this PLMN B (second public land mobile network identification information), and capability exposure indication information. The capability exposure indication information indicate whether the NEF-2 agrees to expose a network capability to the AF. If rejected, the second response message may include a rejection cause value.

The interworking gateway-2 forwards the second response message to the interworking gateway-1 of the PLMN A based on the identification of the target PLMN A. The interworking gateway-1 transmits the second response message to the NEF-1.

In one embodiment, S44b: The NEF-2 returns the second response message to the NEF-1.

In the embodiment of the present disclosure, when the NEFs of two PLMNs may interact directly, an interworking gateway may not be needed. To be specific, the NEF-2 may directly transmit the second response message to the NEF-1.

In one embodiment, S45: The NEF-1 returns the second response message to the AF.

In the embodiment of the present disclosure, after receiving the second response message, the NEF-1 may forward the second response message to the AF.

In one embodiment, S44c: The NEF-2 returns the second response message to the AF based on the exposure information notification address directly.

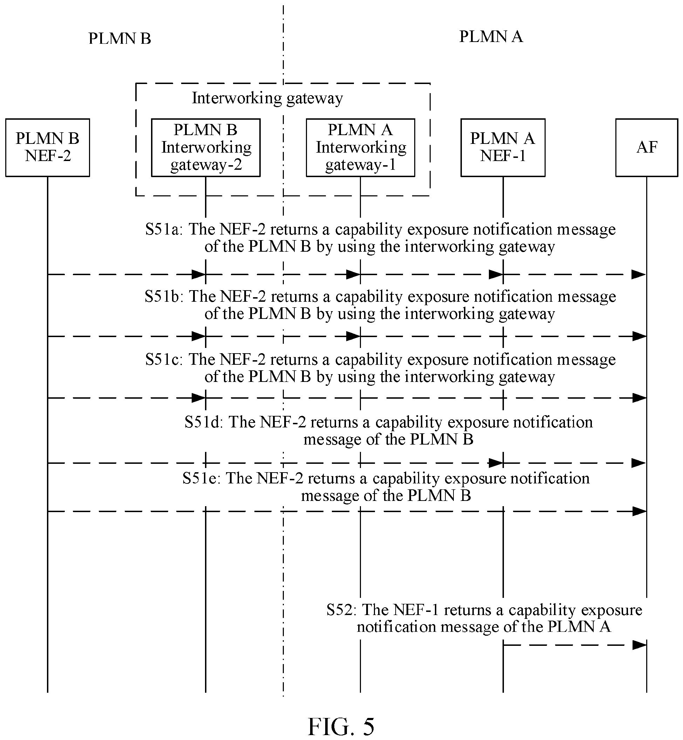

As shown in FIG. 5, in a system architecture of a scenario shown in FIG. 5, an application function (such as an AF), a first network exposure function (such as an NEF-1), and a second network exposure function (such as an NEF-2) are included. These network elements are configured to perform the network capability exposure method in an embodiment of the present disclosure.

The method in an embodiment of the present disclosure may further include: generating a capability exposure notification message of the PLMN B when network information of the PLMN B in FIG. 4 satisfies second reporting condition information. A path of the capability exposure notification message of PLMN B depends on whether an interworking gateway may directly transmit a message to an exposure information notification address of PLMN B in FIG. 4, and there are some optional processes as follows.

S51a: The NEF-2 returns the capability exposure notification message of the PLMN B to the AF by using an interworking gateway-2 of the PLMN B, an interworking gateway-1 of a PLMN A, and the NEF-1 separately.

In an embodiment of the present disclosure, the NEF-2 may transmit the capability exposure notification message of the PLMN B to the interworking gateway-2 of the PLMN B when the network information of the PLMN B in FIG. 4 satisfies the second reporting condition information. The capability exposure notification message of the PLMN B may include identification of a target PLMN A, identification of this PLMN B, an exposure information notification address, and exposure information content of the PLMN B. The interworking gateway-2 transmits the capability exposure notification message of the PLMN B to an interworking gateway-1 of the PLMN A, the interworking gateway-1 transmits the capability exposure notification message of the PLMN B to the NEF-1, and the capability exposure notification message of the PLMN B is finally transmitted to the exposure information notification address.

In one embodiment, S51b: The NEF-2 returns the capability exposure notification message of the PLMN B to the AF by using the interworking gateway-2 of the PLMN B and the interworking gateway-1 of the PLMN A separately.

In an embodiment of the present disclosure, the NEF-2 may transmit the capability exposure notification message of the PLMN B to the interworking gateway-2 of the PLMN B when the network information of the PLMN B satisfies the second reporting condition information. The capability exposure notification message of the PLMN B includes identification of a target PLMN A, identification of this PLMN B, an exposure information notification address, and exposure information content of the PLMN B. The interworking gateway-2 transmits the capability exposure notification message of the PLMN B to an interworking gateway-1 of the PLMN A, and the interworking gateway-1 transmits the capability exposure notification message of the PLMN B to the exposure information notification address.

In one embodiment, S51c: The NEF-2 returns the capability exposure notification message of the PLMN B to the AF by using the interworking gateway-2 of the PLMN B.

In an embodiment of the present disclosure, the NEF-2 may transmit the capability exposure notification message of the PLMN B to the interworking gateway-2 of the PLMN B when the network information of the PLMN B satisfies second reporting condition information. The capability exposure notification message of the PLMN B includes identification of this PLMN B, an exposure information notification address, and exposure information content of the PLMN B. The interworking gateway-2 transmits the capability exposure notification message of the PLMN B to the exposure information notification address.

In one embodiment, S51d: The NEF-2 transmits the capability exposure notification message of the PLMN B to the NEF-1, and the NEF-1 returns the capability exposure notification message of the PLMN B to the AF.

In one embodiment, S51e: The NEF-2 transmits the capability exposure notification message of the PLMN B to the AF.

When NEFs of two PLMNs may interact directly, an interworking gateway may not be needed. To be specific, the NEF-2 may directly transmit the capability exposure notification message of the PLMN B to the NEF-1, and the NEF-1 transmits the capability exposure notification message of the PLMN B to the AF. Alternatively, the NEF-2 directly transmits the capability exposure notification message of the PLMN B to the AF.

In one embodiment, S52: The NEF-1 returns a capability exposure notification message of the PLMN A to the AF.

In an embodiment of the present disclosure, the NEF-1 may transmit the capability exposure notification message of the PLMN A to the exposure information notification address when network information of the PLMN A satisfies first reporting condition information. The capability exposure notification message of the PLMN A includes exposure information content of the PLMN A.

For other content of embodiments of the present disclosure, reference may be made to the other embodiments mentioned above.

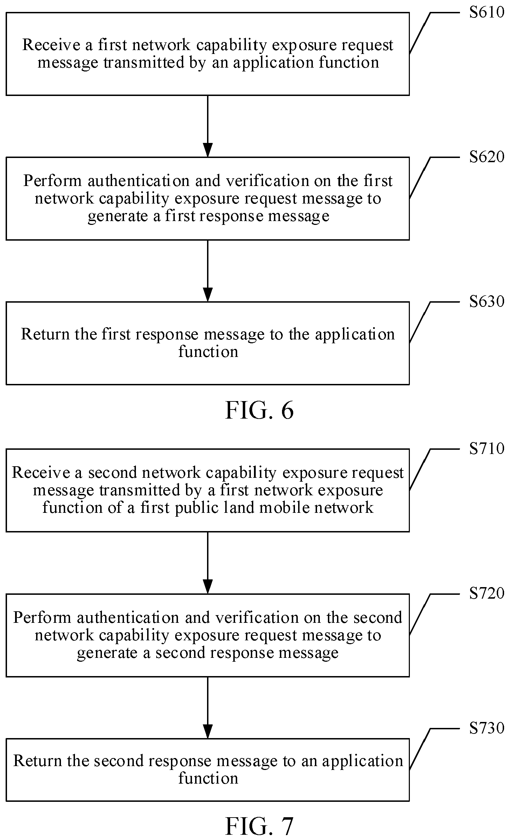

FIG. 6 is a schematic flowchart of a network capability exposure method according to another embodiment of the present disclosure.

As shown in FIG. 6, the method in the embodiment of the present disclosure may be performed by a first network exposure function of a first public land mobile network. The method in the embodiment of the present disclosure may include the following operations.

S610: Receive a first network capability exposure request message transmitted by an application function.

In an embodiment of the present disclosure, the first network capability exposure request message may include application function identification information, an exposure information notification address, first network capability exposure request parameter information, and capability exposure request sharing information.

If the capability exposure request sharing information indicates that the application function allows to share the capability exposure request, the first network capability exposure request message may further include second public land mobile network identification information indicating that sharing of the capability exposure request is allowed.

S620: Perform authentication and verification on the first network capability exposure request message to generate a first response message.

The first response message may include capability exposure request sharing indication information. The capability exposure request sharing indication information may be configured for indicating whether the first network exposure function agrees to share a capability exposure request with a second public land mobile network.

S630: Return the first response message to the application function.

In an exemplary embodiment, the method may further include: transmitting a second network capability exposure request message to a second network exposure function of the second public land mobile network if the capability exposure request sharing indication information indicates that the first network exposure function agrees to share the capability exposure request with the second public land mobile network, the second network capability exposure request message including the application function identification information, the exposure information notification address, and second network capability exposure request parameter information; receiving a second response message with respect to the second network capability exposure request message, the second response message including capability exposure indication information, and the capability exposure indication information being configured for indicating whether the second network exposure function agrees to expose a network capability to the application function; and forwarding the second response message to the application function.

In an embodiment of the present disclosure, if indication information about "whether to agree the second network capability exposure request message" indicates that the NEF-2 agrees the second network capability exposure request message, the NEF-2 transmits, to the AF, capability exposure indication information of a PLMN B corresponding a second event identity by using the second response message.

In an exemplary embodiment, the second network capability exposure request parameter information may further include second reporting condition information.

In an exemplary embodiment, the transmitting a second network capability exposure request message to a second network exposure function of the second public land mobile network includes: transmitting the second network capability exposure request message to a first interworking gateway of the first public land mobile network. The second network capability exposure request message further includes second public land mobile network identification information and first public land mobile network identification information.

The second network capability exposure request message may be configured for indicating the first interworking gateway to transmit, based on the second public land mobile network identification information, the second network capability exposure request message to a second interworking gateway of the second public land mobile network.

The second network capability exposure request message may be further configured for indicating the second interworking gateway to transmit the second network capability exposure request message to the second network exposure function.

In an exemplary embodiment, the method may further include: receiving a capability exposure notification message of the second public land mobile network if the capability exposure indication information indicates that the second network exposure function agrees to expose the network capability to the application function, the capability exposure notification message including exposure information content; and transmitting the capability exposure notification message to the application function.

For other content of embodiments of the present disclosure, reference may be made to the other embodiments mentioned above.

FIG. 7 is a schematic flowchart of a network capability exposure method according to still another embodiment of the present disclosure.

As shown in FIG. 7, the method in the embodiment of the present disclosure may be performed by a second network exposure function of a second public land mobile network. The method in the embodiment of the present disclosure may include the following operations.

S710: Receive a second network capability exposure request message transmitted by a first network exposure function of a first public land mobile network.

The second network capability exposure request message may include application function identification information, identification of a PLMN B, an exposure information notification address, and second network capability exposure request parameter information.

S720: Perform authentication and verification on the second network capability exposure request message to generate a second response message. The second response message may include capability exposure indication information, and the capability exposure indication information may be configured for indicating whether the second network exposure function agrees to expose a network capability to an application function.

S730: Return the second response message to the application function.

In an exemplary embodiment, the method may further include: generating a capability exposure notification message of the second public land mobile network if the capability exposure indication information indicates that the second network exposure function agrees to expose the network capability to the application function, the capability exposure notification message including exposure information content; and transmitting the capability exposure notification message of the second public land mobile network to the application function.

For other content of embodiments of the present disclosure, reference may be made to the other embodiments mentioned above.

In the network capability exposure method provided in embodiments of the present disclosure, an AF may actively request to share a capability exposure request to a PLMN other than the requested PLMN.

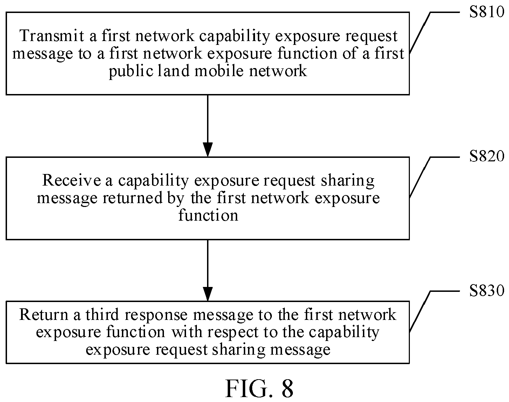

FIG. 8 is a schematic flowchart of a network capability exposure method according to a still yet another embodiment of the present disclosure.

As shown in FIG. 8, the method in the embodiment of the present disclosure may be performed by an application function. The method in the embodiment of the present disclosure may include the following operations.

S810: Transmit a third network capability exposure request message to a first network exposure function of a first public land mobile network.

The third network capability exposure request message may include application function identification information, an exposure information notification address, and first network capability exposure request parameter information.

S820: Receive capability exposure request sharing message returned by the first network exposure function.

In the embodiment of the present disclosure, when the NEF-1 receives the third network capability exposure request message transmitted by the AF, the third network capability exposure request message does not carry capability exposure request sharing information, in other words, the AF does not actively request to share a capability exposure request. However, the NEF-1 may transmit a capability exposure request sharing message to the AF. The capability exposure request sharing message may include second public land mobile network identification information indicating that sharing of the capability exposure request is allowed. Using the foregoing PLMN B as an example, the AF is asked whether to agree to transmit a capability exposure request to the PLMN B.

S830: Return a third response message to the first network exposure function with respect to the capability exposure request sharing message.

After receiving the capability exposure request sharing message transmitted by the NEF-1, the AF may generate the third response message. The third response message may include request sharing indication information. The request sharing indication information may be configured for indicating whether the application function agrees to share a capability exposure request with a second public land mobile network corresponding to the second public land mobile network identification information.

In an exemplary embodiment, the method may further include: receiving a capability exposure notification message of the second public land mobile network if the request sharing indication information indicates that the application function agrees to share the capability exposure request with the second public land mobile network, the capability exposure notification message of the second public land mobile network including exposure information content.

In the embodiment of the present disclosure, if the request sharing indication information indicates that the AF does not agree to share a capability exposure request to the PLMN B, the AF does not receive the capability exposure notification message transmitted by the PLMN B.

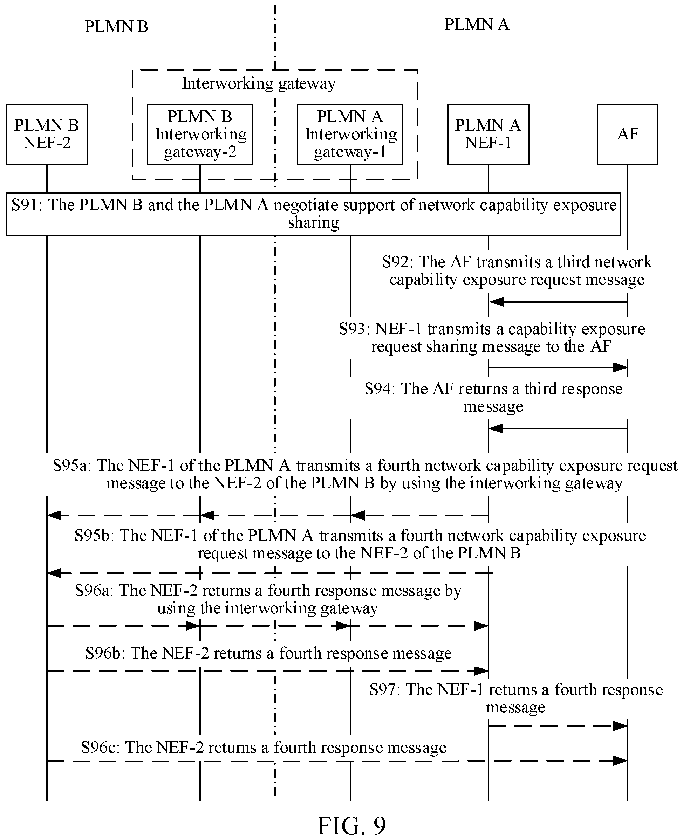

For other content of embodiments of the present disclosure, reference may be made to the descriptions of other embodiments mentioned above. An example is used below with reference to an embodiment of FIG. 9.

The embodiment of FIG. 9 shows that an NEF (using an NEF-1 as an example) actively requests to share capability exposure to an AF.

As shown in FIG. 9, in a system architecture of a scenario shown in FIG. 9, an application function (such as an AF), a first network exposure function (such as an NEF-1), and a second network exposure function (such as an NEF-2) are included. These network elements are configured to perform the network capability exposure method in an embodiment of the present disclosure. The method provided in the embodiment of the present disclosure may include the following operations.

S91: A PLMN B and a PLMN A negotiate support of network capability exposure sharing.

In the embodiment of the present disclosure, the PLMN A and the PLMN B negotiate whether to support network capability exposure sharing. Content of the negotiation may include whether to support capability exposure sharing for a particular AF and capability exposure sharing for a type of service, an Event ID supporting network capability exposure sharing, a reporting condition supporting network information exposure, and the like. The content of the negotiation is referred to as network capability exposure sharing negotiation information. Network elements that support negotiation may be NEFs of two PLMNs, network management systems of two PLMNs, or the like. This is not limited in the present disclosure.

In one situation, the NEF-1 transmits a negotiation message to the NEF-2 to negotiate support of network capability exposure sharing. The negotiation message carries identification of AF, traffic flow template information, an Event ID, a reporting condition for network information exposure, and the like. The NEF-2 returns a response message to inform the NEF-1 whether to agree the negotiation.

In another situation, the NEF-2 transmits a negotiation message to the NEF-1 to negotiate support of network capability exposure sharing. The negotiation message carries identification of AF, traffic flow template information, an Event ID, a reporting condition for network information exposure, and the like. The NEF-1 returns a response message to inform the NEF-2 whether to agree the negotiation.

For example, the NEF-1 may transmit a negotiation message to the NEF-2 by using an interworking gateway-1 and an interworking gateway-2 to negotiate support of network capability exposure sharing. The negotiation message carries at least one of an AF ID, traffic flow template information, an Event ID, a reporting condition for network information exposure, and the like. The NEF-2 may return a response message by using the interworking gateway-2 and the interworking gateway-1 to inform the NEF-1 whether to agree the negotiation.

For another example, the NEF-2 may transmit a negotiation message to the NEF-1 by using an interworking gateway-2 and an interworking gateway-1 to negotiate support of network capability exposure sharing. The negotiation message carries at least one of an AF ID, traffic flow template information, an Event ID, a reporting condition for network information exposure, and the like. The NEF-1 returns a response message by using the interworking gateway-1 and the interworking gateway-2 to inform the NEF-2 whether to agree the negotiation.

S92: The AF transmits a third network capability exposure request message to the NEF-1 of the PLMN A.

When the AF transmits the third network capability exposure request message to the NEF-1, the third network capability exposure request message may include the AF ID, an exposure information notification address, first network capability exposure request parameter information, and the like. The first network capability exposure request parameter information may include a first Event ID, and may further include first reporting condition information. The first network capability exposure request parameter information may further include traffic flow template information.

S93: The NEF-1 of the PLMN A returns a capability exposure request sharing message to the AF.

The capability exposure request sharing message is transmitted to the AF when the third network capability exposure request message transmitted by the AF satisfies capability exposure that may be shared in network capability exposure sharing negotiation information. The capability exposure request sharing message may include PLMN B sharing identification information (second public land mobile network identification information) indicating that sharing of a capability exposure request is allowed. If a capability exposure request can be shared with a plurality of PLMNs, identification information of the plurality of PLMNs is returned.

S94: The AF returns a third response message to the NEF-1 of the PLMN A.

After receiving the capability exposure request sharing message, the AF may return the third response message to the NEF-1. The third response message may include request sharing indication information. The request sharing indication information may indicate whether the AF agrees to share a capability exposure request with a second public land mobile network corresponding to the second public land mobile network identification information.

The NEF-1 may generate a fourth network capability exposure request message when the request sharing indication information in the third response message received by the NEF-1 indicates that the AF agrees to share a capability exposure request with the second public land mobile network. The fourth network capability exposure request message may include an AF ID, second network capability exposure request parameter information, and the like. The second network capability exposure request parameter information may include a second Event ID, and may further include second reporting condition information. The second network capability exposure request parameter information may further include traffic flow template information.

In one embodiment, S95a: The NEF-1 of the PLMN A transmits the fourth network capability exposure request message to the NEF-2 of the PLMN B by using an interworking gateway-1 of the PLMN A and an interworking gateway-2 of the PLMN B sequentially.

In one embodiment, S95b: The NEF-1 of the PLMN A transmits the fourth network capability exposure request message to the NEF-2 of the PLMN B.

After the NEF-2 receives the fourth network capability exposure request message, authentication and verification are performed on the fourth network capability exposure request message to generate a fourth response message.

In one embodiment, S96a: The NEF-2 of the PLMN B transmits the fourth response message to the NEF-1 of the PLMN A by using the interworking gateway-2 of the PLMN B and the interworking gateway-1 of the PLMN A sequentially.

In one embodiment, S96b: The NEF-2 of the PLMN B transmits the fourth response message to the NEF-1 of the PLMN A.

In one embodiment, S96c: The NEF-2 returns the fourth response message to the AF.

In one embodiment, S97: The NEF-1 returns the fourth response message to the AF.

When the AF agrees to share the capability exposure request, the NEF-1 of the PLMN A completes a capability exposure sharing request process to the NEF-2 of the PLMN B. When the request process is completed, exposure information content (that is, capability exposure information) in the PLMN B may be notified to the AF by using the process in FIG. 5.

For other content of embodiments of the present disclosure, reference may be made to the other embodiments mentioned above.

The network capability exposure method provided by embodiments of the present disclosure may implement negotiation of network capability exposure sharing between different PLMNs.

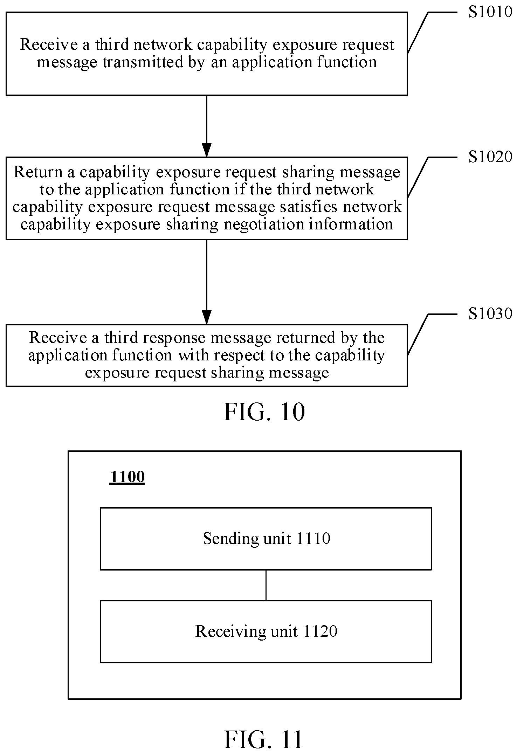

FIG. 10 is a schematic flowchart of a network capability exposure method according to a still yet another embodiment of the present disclosure.

As shown in FIG. 10, the method in the embodiment of the present disclosure may be performed by a first network exposure function of a first public land mobile network. The method in the embodiment of the present disclosure may include the following operations.

S1010: Receive a third network capability exposure request message transmitted by an application function. The third network capability exposure request message may include application function identification information, an exposure information notification address, and first network capability exposure request parameter information.

S1020: Return a capability exposure request sharing message to the application function if the third network capability exposure request message satisfies network capability exposure sharing negotiation information. The capability exposure request sharing message may include second public land mobile network identification information indicating that sharing of a capability exposure request is allowed.

S1030: Receive a third response message returned by the application function with respect to the capability exposure request sharing message. The third response message may include request sharing indication information, and the request sharing indication information may be configured for indicating whether the application function agrees to share a capability exposure request with a second public land mobile network.

For other content of embodiments of the present disclosure, reference may be made to the other embodiments mentioned above.

FIG. 11 is a block diagram of an application function according to an embodiment of the present disclosure.

As shown in FIG. 11, an application function 1100 provided in an embodiment of the present disclosure may include a sending unit 1110 and a receiving unit 1120.

The sending unit 1110 may be configured to transmit a first network capability exposure request message to a first network exposure function of a first public land mobile network. The first network capability exposure request message may include application function identification information, an exposure information notification address, first network capability exposure request parameter information, and capability exposure request sharing information.

In an exemplary embodiment, if the capability exposure request sharing information indicates that the application function allows to share the capability exposure request, the first network capability exposure request message may further include second public land mobile network identification information indicating that sharing of the capability exposure request is allowed.

The receiving unit 1120 may be configured to receive a first response message returned by the first network exposure function with respect to the first network capability exposure request message. The first response message may include capability exposure request sharing indication information. The capability exposure request sharing indication information may be configured for indicating whether the first network exposure function agrees to share a capability exposure request with a second public land mobile network.

In an exemplary embodiment, the receiving unit 1120 may be further configured to receive a second response message if the capability exposure request sharing indication information indicates that the first network exposure function agrees to share the capability exposure request with the second public land mobile network. The second response message may include capability exposure indication information. The capability exposure indication information may be configured for indicating whether a second network exposure function of the second public land mobile network agrees to expose a network capability to the application function.

In an exemplary embodiment, the receiving unit 1120 may be further configured to receive a capability exposure notification message of the second public land mobile network if the capability exposure indication information indicates that the second network exposure function agrees to expose the network capability to the application function. The capability exposure notification message may include exposure information content.

In an exemplary embodiment, the receiving unit 1120 may be further configured to receive the capability exposure notification message from the first network exposure function or the second network exposure function.

In an exemplary embodiment, the receiving unit 1120 may be further configured to receive the capability exposure notification message from a first interworking gateway of the first public land mobile network or a second interworking gateway of the second public land mobile network.

In an exemplary embodiment, the first response message includes a first event identity, and the first event identity is configured for indicating that the first network exposure function agrees the first network capability exposure request message.

In an exemplary embodiment, the first network capability exposure request parameter information may further include first reporting condition information.

In an exemplary embodiment, the first network capability exposure request parameter information may further include traffic flow template information.

For other content of embodiments of the present disclosure, reference may be made to the other embodiments mentioned above.

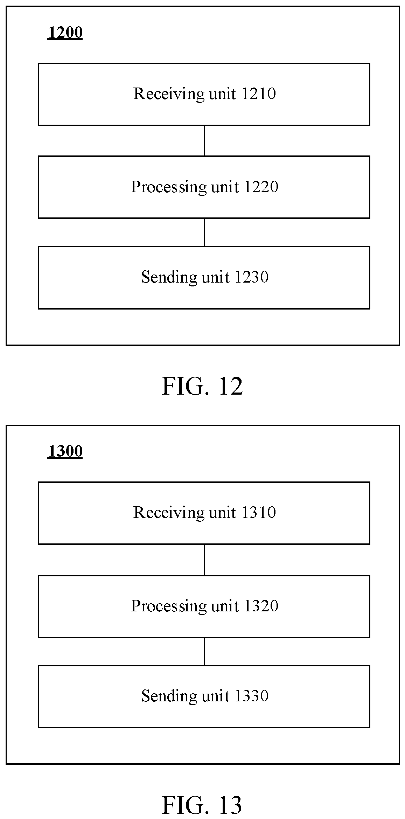

FIG. 12 is a block diagram of a first network exposure function of a first public land mobile network according to an embodiment of the present disclosure.

As shown in FIG. 12, a first network exposure function 1200 provided in the embodiment of the present disclosure may include a receiving unit 1210, a processing unit 1220, and a sending unit 1230.

The receiving unit 1210 may be configured to receive a first network capability exposure request message transmitted by an application function. The first network capability exposure request message may include application function identification information, an exposure information notification address, first network capability exposure request parameter information, and capability exposure request sharing information.

In an exemplary embodiment, if the capability exposure request sharing information indicates that the application function allows to share the capability exposure request, the first network capability exposure request message may further include second public land mobile network identification information indicating that sharing of the capability exposure request is allowed.

The processing unit 1220 may be configured to perform authentication and verification on the first network capability exposure request message to generate a first response message. The first response message may include capability exposure request sharing indication information. The capability exposure request sharing indication information may be configured for indicating whether the first network exposure function agrees to share a capability exposure request with a second public land mobile network.

The sending unit 1230 may be configured to return the first response message to the application function.

In an exemplary embodiment, the sending unit 1230 may be further configured to transmit a second network capability exposure request message to a second network exposure function of the second public land mobile network if the capability exposure request sharing indication information indicates that the first network exposure function agrees to share the capability exposure request with the second public land mobile network. The second network capability exposure request message includes the application function identification information, the exposure information notification address, and second network capability exposure request parameter information. The receiving unit 1210 may be further configured to receive a second response message with respect to the second network capability exposure request message. The second response message includes capability exposure indication information. The capability exposure indication information may be configured for indicating whether the second network exposure function agrees to expose a network capability to the application function. The sending unit 1230 may be further configured to forward the second response message to the application function.

In an exemplary embodiment, the receiving unit 1210 may be further configured to receive a capability exposure notification message of the second public land mobile network if the capability exposure indication information indicates that the second network exposure function agrees to expose the network capability to the application function, the capability exposure notification message including exposure information content. The sending unit 1230 may be further configured to transmit the capability exposure notification message to the application function.

In an exemplary embodiment, the second response message includes a second event identity, and the second event identity is configured for indicating that the second network exposure function agrees the second network capability exposure request message.

In an exemplary embodiment, the second network capability exposure request parameter information may further include second reporting condition information.

In an exemplary embodiment, the sending unit 1230 may be further configured to transmit the second network capability exposure request message to a first interworking gateway of the first public land mobile network. The second network capability exposure request message further includes second public land mobile network identification information and first public land mobile network identification information.

The second network capability exposure request message may be configured for indicating the first interworking gateway to transmit, based on the second public land mobile network identification information, the second network capability exposure request message to a second interworking gateway of the second public land mobile network.

The second network capability exposure request message may be further configured for indicating the second interworking gateway to transmit the second network capability exposure request message to the second network exposure function.

For other content of embodiments of the present disclosure, reference may be made to the other embodiments mentioned above.

FIG. 13 is a block diagram of a second network exposure function of a second public land mobile network according to an embodiment of the present disclosure.

As shown in FIG. 13, the second network exposure function 1300 provided in the embodiment of the present disclosure may include a receiving unit 1310, a processing unit 1320, and a sending unit 1330.

The receiving unit 1310 may be configured to receive a second network capability exposure request message transmitted by a first network exposure function of a first public land mobile network. The second network capability exposure request message may include application function identification information, an exposure information notification address, and second network capability exposure request parameter information.

The processing unit 1320 may be configured to perform authentication and verification on the second network capability exposure request message to generate a second response message. The second response message may include capability exposure indication information. The capability exposure indication information may be configured for indicating whether the second network exposure function agrees to expose a network capability to an application function.

The sending unit 1330 may be configured to return the second response message to the application function.

In an exemplary embodiment, the processing unit 1320 may be further configured to generate a capability exposure notification message of the second public land mobile network if the capability exposure indication information indicates that the second network exposure function agrees to expose the network capability to the application function. The capability exposure notification message may include exposure information content. The sending unit 1330 may be further configured to transmit the capability exposure notification message of the second public land mobile network to the application function.

For other content of embodiments of the present disclosure, reference may be made to the other embodiments mentioned above.

Further, an embodiment of the present disclosure further provides an application function, including a sending unit and a receiving unit.

The sending unit may be configured to transmit a third network capability exposure request message to a first network exposure function of a first public land mobile network. The third network capability exposure request message may include application function identification information, an exposure information notification address, and first network capability exposure request parameter information.

The receiving unit may be configured to receive a capability exposure request sharing message returned by the first network exposure function. The capability exposure request sharing message may include second public land mobile network identification information indicating that sharing of a capability exposure request is allowed.

The sending unit may be further configured to return a third response message to the first network exposure function with respect to the capability exposure request sharing message. The third response message may include request sharing indication information. The request sharing indication information may be configured for indicating whether the application function agrees to share a capability exposure request with a second public land mobile network.

In an exemplary embodiment, the receiving unit is further configured to receive a capability exposure notification message of the second public land mobile network if the request sharing indication information indicates that the application function agrees to share the capability exposure request with the second public land mobile network. The capability exposure notification message of the second public land mobile network may include exposure information content.

For other content of embodiments of the present disclosure, reference may be made to the other embodiments mentioned above.

An embodiment of the present disclosure further provides a first network exposure function of a first public land mobile network, including a receiving unit and a sending unit.

The receiving unit may be configured to receive a third network capability exposure request message transmitted by an application function. The third network capability exposure request message may include application function identification information, an exposure information notification address, and first network capability exposure request parameter information.

The sending unit may be configured to return a capability exposure request sharing message to the application function if the third network capability exposure request message satisfies network capability exposure sharing negotiation information. The capability exposure request sharing message may include second public land mobile network identification information indicating that sharing of a capability exposure request is allowed.

The receiving unit may be further configured to receive a third response message returned by the application function with respect to the capability exposure request sharing message. The third response message may include request sharing indication information. The request sharing indication information may be configured for indicating whether the application function agrees to share a capability exposure request with a second public land mobile network.

For other content of embodiments of the present disclosure, reference may be made to the other embodiments mentioned above.

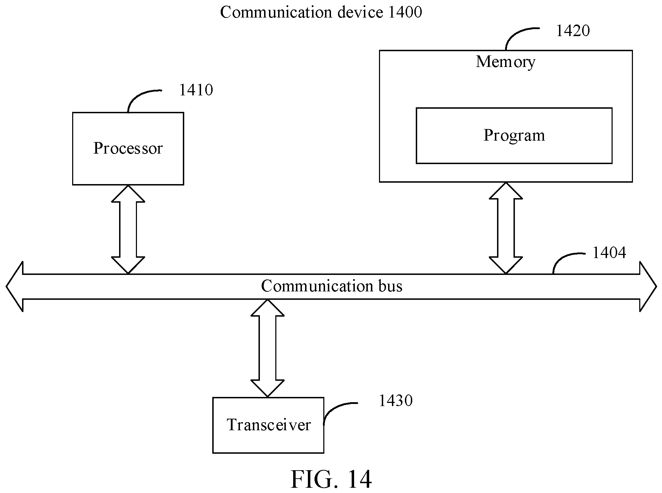

FIG. 14 is a schematic diagram of a structure of a communication device 1400 according to an embodiment of the present disclosure. The communication device may be a terminal such as UE, a network device such as a base station, or an NEF and/or an AF and/or an interworking gateway. The communication device 1400 shown in FIG. 14 includes a processor 1410. The processor 1410 may call and run a computer program from a memory to implement the method in the embodiment of the present disclosure.

In one embodiment, as shown in FIG. 14, the communication device 1400 may further include a memory 1420. The processor 1410 may call and run a computer program from the memory 1420, to implement the method in the embodiment of the present disclosure.

The memory 1420 may be a separate device independent of the processor 1410, or may be integrated into the processor 1410.

In one embodiment, as shown in FIG. 14, the communication device 1400 may further include a transceiver 1430. The processor 1410 may control the transceiver 1430 to communicate with other devices, specifically, may send information or data to other devices or receive information or data from other devices.

The transceiver 1430 may include a transmitter and a receiver. The transceiver 1430 may further include one or more antennas.

In one embodiment, the communication device 1400 may be specifically various network elements in embodiments of the present disclosure, and the communication device 1400 may implement corresponding processes implemented by each network element in the methods of embodiments of the present disclosure. For brevity, details are not described herein again.

In one embodiment, the communication device 1400 may be specifically the network device in embodiments of the present disclosure, and the communication device 1400 may implement corresponding processes implemented by the network device in the methods of embodiments of the present disclosure. For brevity, details are not described herein again.

In one embodiment, the communication device 1400 may be specifically a mobile terminal/terminal in embodiments of the present disclosure, and the communication device 1400 may implement corresponding processes implemented by the mobile terminal/terminal in the methods of embodiments of the present disclosure. For brevity, details are not described herein again.

The processor in the embodiment of the present disclosure may be an integrated circuit chip and has a signal processing capability. In an implementation process, each operation in the foregoing method embodiments may be completed by using an integrated logic circuit of hardware in the processor or instructions in the form of software.

The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, operations, and logic block diagrams that are disclosed in embodiments of the present disclosure may be implemented or performed. The general-purpose processor may be a microprocessor, or the processor may be any conventional processor, or the like. The operations of the methods disclosed with reference to embodiments of the present disclosure may be directly performed and completed by using a hardware decoding processor, or may be performed and completed by using a combination of hardware and software modules in the decoding processor. The software module may be stored in a storage medium that is mature in the art, such as a random access memory, a flash memory, a read-only memory, a programmable read-only memory, an electrically erasable programmable memory, or a register. The storage medium is located in the memory. The processor reads information in the memory and completes the operations of the methods in combination with hardware thereof.

The memory in the embodiment of the present disclosure may be a volatile memory or a non-volatile memory, or may include a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) serving as an external cache. according to illustrative but not limited description, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). The memory in the system and method described in this specification includes, but is not limited to, these memories and any other suitable types. The memory described above is illustrative but not limiting.

An embodiment of the present disclosure further provides a computer-readable storage medium, configured to store a computer program.

In one embodiment, the computer-readable storage medium may be used in the network device in embodiments of the present disclosure, and the computer program causes a computer to execute corresponding processes implemented by the network device in the methods of embodiments of the present disclosure. For brevity, details are not described herein again.

In one embodiment, the computer-readable storage medium may be used in the network element in embodiments of the present disclosure, and the computer program causes a computer to execute corresponding processes implemented by the network element in the methods of embodiments of the present disclosure. For brevity, details are not described herein again.

In one embodiment, the computer-readable storage medium may be used in the mobile terminal/terminal in embodiments of the present disclosure, and the computer program causes a computer to execute corresponding processes implemented by the mobile terminal/terminal in the methods of embodiments of the present disclosure. For brevity, details are not described herein again.

An embodiment of the present disclosure further provides a computer program product, including computer program instructions.

In one embodiment, the computer program product may be used in the network device in embodiments of the present disclosure, and the computer program instructions cause a computer to execute corresponding processes implemented by the network device in the methods of embodiments of the present disclosure. For brevity, details are not described herein again.

In one embodiment, the computer program product may be used in the network element in embodiments of the present disclosure, and the computer program instructions cause a computer to execute corresponding processes implemented by the network element in the methods of embodiments of the present disclosure. For brevity, details are not described herein again.

In one embodiment, the computer program product may be used in the mobile terminal/terminal in embodiments of the present disclosure, and the computer program instructions cause a computer to execute corresponding processes implemented by the mobile terminal/terminal in the methods of embodiments of the present disclosure. For brevity, details are not described herein again.

An embodiment of the present disclosure further provides a computer program.

In one embodiment, the computer program may be used in the network device in embodiments of the present disclosure. When the computer program is run on a computer, the computer is enabled to execute corresponding processes implemented by the network device in the methods of embodiments of the present disclosure. For brevity, details are not described herein again.

In one embodiment, the computer program may be used in the network element in embodiments of the present disclosure. When the computer program is run on a computer, the computer is enabled to execute corresponding processes implemented by the network element in the methods of embodiments of the present disclosure. For brevity, details are not described herein again.

In one embodiment, this computer program may be used in the mobile terminal/terminal in embodiments of the present disclosure. When the computer program is run on a computer, the computer is enabled to execute corresponding processes implemented by the mobile terminal/terminal in the methods of embodiments of the present disclosure. For brevity, details are not described herein again.

A person of ordinary skill in the art may notice that the exemplary units and algorithm operations described with reference to embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of embodiments of the present disclosure.

A person skilled in the art may clearly understand that, for simple and clear description, for specific work processes of the foregoing described system, apparatus, and unit, reference may be made to corresponding processes in the foregoing method embodiments, and details are not described herein again.

In the several embodiments provided in the present disclosure, the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or not performed.

The units described as separate parts may or may not be physically separate, and components displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit. If implemented in the form of software functional units and sold or used as an independent product, the functions may be stored in a computer-readable storage medium. Based on such an understanding, the technical solutions of the present disclosure essentially, or the part contributing to the related art, or some of the technical solutions may be implemented in the form of a software product. The computer software product is stored in a storage medium and includes several instructions for instructing a computer device (which may be a personal computer, a server, a network device, or the like) to perform all or some of the operations of the methods described in embodiments of the present disclosure. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A network capability exposure method, performed by an application function, and comprising:
transmitting a first network capability exposure request message to a first network exposure function of a first public land mobile network, the first network capability exposure request message comprising application function identification information, an exposure information notification address, first network capability exposure request parameter information, and capability exposure request sharing information; and
receiving a first response message returned by the first network exposure function with respect to the first network capability exposure request message, the first response message comprising capability exposure request sharing indication information, and the capability exposure request sharing indication information being configured for indicating whether the first network exposure function agrees to share a capability exposure request with a second public land mobile network.

2. The method according to claim 1, wherein if the capability exposure request sharing information indicates that the application function allows to share the capability exposure request, the first network capability exposure request message further comprises second public land mobile network identification information indicating that sharing of the capability exposure request is allowed.

3. The method according to claim 1 or 2, further comprising:
receiving a second response message if the capability exposure request sharing indication information indicates that the first network exposure function agrees to share the capability exposure request with the second public land mobile network, wherein the second response message comprises capability exposure indication information, and the capability exposure indication information is configured for indicating whether a second network exposure function of the second public land mobile network agrees to expose a network capability to the application function.

4. The method according to claim 3, further comprising:
receiving a capability exposure notification message of the second public land mobile network if the capability exposure indication information indicates that the second network exposure function agrees to expose the network capability to the application function, the capability exposure notification message comprising exposure information content.

5. The method according to any one of claims 1 to 4, wherein the first response message comprises a first event identity, and the first event identity is configured for indicating that the first network exposure function agrees the first network capability exposure request message.

6. A network capability exposure method, performed by a first network exposure function of a first public land mobile network, and comprising:
receiving a first network capability exposure request message transmitted by an application function, the first network capability exposure request message comprising application function identification information, an exposure information notification address, first network capability exposure request parameter information, and capability exposure request sharing information;
performing authentication and verification on the first network capability exposure request message to generate a first response message, the first response message comprising capability exposure request sharing indication information, and the capability exposure request sharing indication information being configured for indicating whether the first network exposure function agrees to share a capability exposure request with a second public land mobile network; and
returning the first response message to the application function.

7. The method according to claim 6, further comprising:
transmitting a second network capability exposure request message to a second network exposure function of the second public land mobile network if the capability exposure request sharing indication information indicates that the first network exposure function agrees to share the capability exposure request with the second public land mobile network, the second network capability exposure request message comprising the application function identification information, the exposure information notification address, and second network capability exposure request parameter information;
receiving a second response message with respect to the second network capability exposure request message, the second response message comprising capability exposure indication information, and the capability exposure indication information being configured for indicating whether the second network exposure function agrees to expose a network capability to the application function; and
forwarding the second response message to the application function.

8. The method according to claim 7, further comprising:
receiving a capability exposure notification message of the second public land mobile network if the capability exposure indication information indicates that the second network exposure function agrees to expose the network capability to the application function, the capability exposure notification message comprising exposure information content; and
transmitting the capability exposure notification message to the application function.

9. The method according to claim 7, wherein the second response message comprises a second event identity, and the second event identity is configured for indicating that the second network exposure function agrees the second network capability exposure request message.

10. The method according to claim 7, wherein the transmitting a second network capability exposure request message to a second network exposure function of the second public land mobile network comprises:
transmitting the second network capability exposure request message to a first interworking gateway of the first public land mobile network, the second network capability exposure request message further comprising second public land mobile network identification information and first public land mobile network identification information,
the second network capability exposure request message being configured for indicating the first interworking gateway to transmit, based on the second public land mobile network identification information, the second network capability exposure request message to a second interworking gateway of the second public land mobile network, and
the second network capability exposure request message being further configured for indicating the second interworking gateway to transmit the second network capability exposure request message to the second network exposure function.

11. A network capability exposure method, performed by a second network exposure function of a second public land mobile network, and comprising:
receiving a second network capability exposure request message transmitted by a first network exposure function of a first public land mobile network, the second network capability exposure request message comprising application function identification information, an exposure information notification address, and second network capability exposure request parameter information;
performing authentication and verification on the second network capability exposure request message to generate a second response message, the second response message comprising capability exposure indication information, and the capability exposure indication information being configured for indicating whether the second network exposure function agrees to expose a network capability to an application function; and
returning the second response message to the application function.

12. The method according to claim 11, further comprising:
generating a capability exposure notification message of the second public land mobile network if the capability exposure indication information indicates that the second network exposure function agrees to expose the network capability to the application function, the capability exposure notification message comprising exposure information content; and
transmitting the capability exposure notification message to the application function.

13. A network capability exposure method, performed by an application function, and comprising:
transmitting a third network capability exposure request message to a first network exposure function of a first public land mobile network, the third network capability exposure request message comprising application function identification information, an exposure information notification address, and first network capability exposure request parameter information;
receiving a capability exposure request sharing message returned by the first network exposure function, the capability exposure request sharing message comprising second public land mobile network identification information indicating that sharing of a capability exposure request is allowed; and
returning a third response message to the first network exposure function with respect to the capability exposure request sharing message, the third response message comprising request sharing indication information, and the request sharing indication information being configured for indicating whether the application function agrees to share a capability exposure request with a second public land mobile network.

14. The method according to claim 13, further comprising:
receiving a capability exposure notification message of the second public land mobile network if the request sharing indication information indicates that the application function agrees to share the capability exposure request with the second public land mobile network, the capability exposure notification message of the second public land mobile network comprising exposure information content.

15. A network capability exposure method, performed by a first network exposure function of a first public land mobile network, and comprising:
receiving a third network capability exposure request message transmitted by an application function, the third network capability exposure request message comprising application function identification information, an exposure information notification address, and first network capability exposure request parameter information;
returning a capability exposure request sharing message to the application function if the third network capability exposure request message satisfies network capability exposure sharing negotiation information, the capability exposure request sharing message comprising second public land mobile network identification information indicating that sharing of a capability exposure request is allowed; and
receiving a third response message returned by the application function with respect to the capability exposure request sharing message, the third response message comprising request sharing indication information, and the request sharing indication information being configured for indicating whether the application function agrees to share a capability exposure request with a second public land mobile network.

16. A network capability exposure system, comprising an application function, a first network exposure function of a first public land mobile network, and a second network exposure function of a second public land mobile network,
the application function being configured to perform the method according to any one of claims 1 to 5;
the first network exposure function being configured to perform the method according to any one of claims 6 to 10; and
the second network exposure function being configured to perform the method according to any one of claims 11 or 12.

17. A network capability exposure system, comprising an application function and a first network exposure function of a first public land mobile network,
the application function being configured to perform the method according to any one of claims 13 or 14; and
the first network exposure function being configured to perform the method according to claim 15.

18. A communication device, comprising:
one or more processors; and
a memory, configured to store one or more computer programs, the one or more computer programs, when executed by the one or more processors, causing the communication device to implement the method according to any one of claims 1 to 5; or
the method according to any one of claims 6 to 10; or
the method according to claim 11 or 12; or
the method according to claim 13 or 14; or
the method according to claim 15.

19. A computer-readable storage medium, having a computer program stored thereon, the computer program, when run on a computer, causing the computer to perform the method according to any one of claims 1 to 5; or
the method according to any one of claims 6 to 10; or
the method according to claim 11 or 12; or
the method according to claim 13 or 14; or
the method according to claim 15.

20. A computer program product, comprising a computer program, the computer program, when executed by a computer, implementing the method according to any one of claims 1 to 5; or
the method according to any one of claims 6 to 10; or
the method according to claim 11 or 12; or
the method according to claim 13 or 14; or
the method according to claim 15.
